# EUROPEAN PATENT SPECIFICATION

(11) **EP 3 009 015 B1**
(45) Date of publication and mention of the grant of the patent: **30.12.2020**
(21) Application number: 15184999.9
(22) Date of filing: 14.09.2015
(51) Int. Cl.: A24C 5/34, G01N 23/16, G01N 21/952

(54) **PROTECTIVE MEMBER FOR ROD-LIKE ELEMENTS, IN PARTICULAR ROD SECTIONS AND/OR AN ENDLESS ROD, TRAVELLING WITHIN A MEASURING HEAD USED IN TOBACCO INDUSTRY AND CORRESPONDING MEASURING HEAD**
IN EINEM IN DER TABAKINDUSTRIE VERWENDETEN MESSKOPF BEWEGLICHES SCHUTZELEMENT FÜR STABFÖRMIGE ELEMENTE, INSBESONDERE STABABSCHNITTE UND/ODER ENDLOSSTÄBE, UND ZUGEHÖRIGER MESSKOPF
ÉLÉMENT PROTECTEUR POUR ÉLÉMENTS EN FORME DE TIGE, EN PARTICULIER DES SECTIONS DE TIGE ET/OU UNE TIGE SANS FIN, SE DÉPLAÇANT À L'INTÉRIEUR D'UNE TÊTE DE MESURE UTILISÉE DANS L'INDUSTRIE DU TABAC ET TÊTE DE MESURE CORRESPONDANTE

(30) Priority: 14.10.2014 PL 40975314
(43) Date of publication of application: 20.04.2016
(73) Proprietor: International Tobacco Machinery Poland Sp. z o.o., 26-600 Radom (PL)
(72) Inventor: MAMERSKI, Marcin, 26-600 Radom (PL); GRUSZKA, Pawel, 26-600 Bielicha (PL)
(74) Representative: Patpol Kancelaria Patentowa Sp. z o.o.

(56) References cited:
- EP-A2- 2 641 487
- GB-A- 1 461 903
- GB-A- 2 179 444
- US-A- 3 386 578
- US-A- 5 675 144

## Description

The present disclosure is related to a protective member for rod-like elements, in particular rod sections and/or an endless rod, travelling within a measuring head used in tobacco industry. The present invention is related to a corresponding measuring head employing the protective member.

Machines for producing filter or cigarette rod sections by cutting a continuous filter or cigarette endless rod are commonly used in tobacco industry. The filter endless rods may be produced from different filter segments or from one kind of a filtering material.

The parameters of the endless rods or rod sections are measured during or upon production. The rods are passed through a measuring head equipped with numerous sensors. A measuring head of a machine for producing multisegment filter rods may be equipped with several kinds of different measuring sensors emitting radiation in order to enable to take measurements of the parameters of the rods passing through the measuring head. Zones of operation of the individual sensors are located very close to each other. In order to increase the precision of the measurements the endless rod should be guided ahead of, behind or through the measuring head.

US 4,986,285 discloses a measuring head employing three sensors arranged radially around a cylindrical hole in which an endless rod is guided.

US 2011/0162665A1 discloses a measuring head having guiding elements at its inlet and outlet, the measuring head being equipped with several sensors the zones of operation of which are not separated.

EP 2641487A2 presents a measuring head including several sensors and a guiding channel for a rod located between the sensors. A replaceable protective sleeve in which the endless rod is guided is located within the channel. The protective sleeve forms a cylindrical longitudinal barrier between a process zone and a measurement zone, the process zone being located within the protective sleeve and forming one common cylindrical space for all the sensors. The aim was to separate the process zone from the measurement zone in order to eliminate infiltration of the impurities (e.g. dust) present in the process zone, impairing the operation of the measuring head.

From US-5,675,144 a measuring head is known with multiple sensor compartments through which multiple rows of cigarettes may be transported in parallel by gravity.

A disadvantage of the above mentioned state of art solutions consists in that the neighboring radiation emitting sensors may disturb the operation of each other.

In view of the above, the object is to provide a protective member for the rod-like elements transported in a measuring head of the above described type, enabling to separate the operation zones of the specific sensors from each other.

It is also an object of the present invention to provide a measuring head in which the operation zones of the specific sensors are separated from each other.

It is also an object of the present invention to provide a measuring head ensuring improved precision of measurements compared to the state of art.

According to the present disclosure a protective member is provided for rod-like elements, in particular rod sections and/or an endless rod, travelling within a measuring head employed in tobacco industry, the measuring head comprising at least two neighboring sensor units enabling to take measurements of the parameters of said rod-like elements by means of the radiation emitted and received by said sensor units, the protective member extending through the operation zones of the individual sensor units.

The protective member is characterized by comprising compartments defined therein, each compartment corresponding to the operation zone of one sensor unit and each compartment comprising at least one first opening enabling percolation of said radiation.

Preferably, the protective member has a generally tubular shape and separate compartments are defined by means of flanges, each flange delimitating, together with a rod-like element travelling within the protective member, a space assigned to each sensor unit, said space being located between the peripheral wall of the rod-like element, by two neighboring flanges and by the internal wall of the protective member, and said space being substantially inaccessible to the radiation emitted by the neighboring sensor units.

Preferably, each compartment further comprises at least one second opening enabling percolation of said radiation, located opposite to a corresponding first opening, each sensor unit comprising a radiation source located on one side of the protective member and a radiation receiver located on the opposite side of the protective member opposite to the respective radiation source.

The protective member is preferably made of a material radiopaque to the radiation emitted and received by the sensor units, the radiation being selected from a group comprising visible radiation, infrared radiation and ultraviolet radiation.

According to the invention a measuring head is provided for use in tobacco industry, the measuring head comprising at least two neighboring sensor units enabling to take measurements of the parameters of rod-like elements, in particular rod sections and/or an endless rod, travelling within the measuring head, by means of radiation emitted and received by the sensor units, the measuring head comprising a protective member for the rod-like elements extending through the operation zones of the specific sensor units, wherein compartments are defined in the protective member, each compartment corresponding to the operation zone of one sensor unit and each compartment comprising at least one first opening enabling percolation of said radiation.

The measuring head according to the present invention is characterized in that the protective member has a generally tubular shape and separate compartments are defined by means of flanges, each flange delimitating, together with the rod-like element travelling within the protective member, a space being assigned to each sensor unit, said space being located between the peripheral wall of the rod-like element, by two neighboring flanges and by the internal wall of the protective member, and said space being substantially inaccessible to the radiation emitted by the neighboring sensor units.

Preferably, each sensor unit comprises a radiation source and a radiation receiver, both being located on the same side of the protective member.

Alternatively, each sensor unit comprises a radiation source located on one side of the protective member and a radiation receiver located on the opposite side of the protective member opposite to the respective radiation source, each compartment of the protective member further comprising at least one second opening enabling percolation of said radiation, located opposite to a corresponding first opening.

Preferably, the protective member of the measuring head is made of a material radiopaque to the radiation emitted and received by the sensor units, the radiation being selected from a group comprising visible radiation, infrared radiation and ultraviolet radiation.

Experiments performed using a measuring head according to the invention comprising the protective member, as described above, have shown that the operation zones of the neighboring sensor units are effectively separated from each other and no radiation interference occurs. Consequently, the precision of the measurements is very high. It has also turned out that although impurities in the form of fine particles of a filtering or wrapping material tend to accumulate on the peripheries of the compartments of the protective member, this effect does not disturb the measurements and consequently the time between necessary replacements of the protective member may be prolonged.

Preferred embodiments of the invention have been further described with reference to the appended drawing in which:
fig. 1 schematically shows a fragment of an exemplary machine used in tobacco industry;
fig. 2 schematically shows a longitudinal section of the measuring head with the protective member according to a first embodiment in which a rod-like element is transported;
fig. 3 schematically shows a longitudinal section of the measuring head according to the invention in which the protective member is not present;
fig. 4 schematically shows a longitudinal section of the measuring head with the protective member according to a second embodiment, in which the rod-like element is not present;
fig. 5 schematically shows a longitudinal section of the measuring head of fig. 4 in which a rod-like element is present.

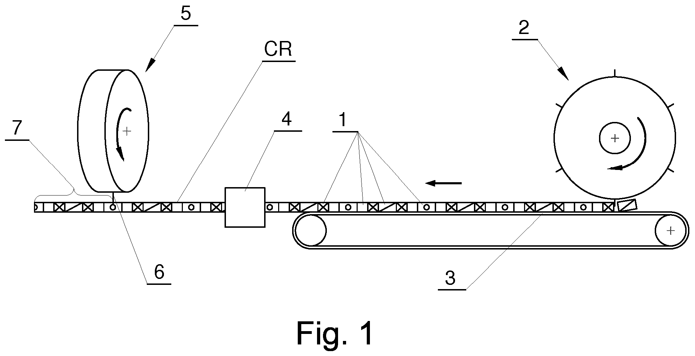

In a machine shown in fig. 1, for producing rod-like elements having a form of multisegment rod sections, the segments 1 are delivered to a conveyor 3 by means of a feeding device 2. The segments 1 travel in a direction shown by an arrow while being wrapped in a wrapping material (not shown). An endless multisegment rod CR is formed as a result of the process of wrapping; it proceeds to pass through a measuring head 4. Then the multisegment rod sections having a length 7 are cut from an endless rod by means of a cutting head 5 equipped with knives 6.

The present invention may be used in production of any type of final or semi-finished products of tobacco industry, e.g. the multisegment filter rod sections containing filter segments, the multisegment filter rod sections containing filter segments and additional components for modifying or imparting aroma, the multisegment filter rod sections containing filter segments and additional objects for modifying filtering proprieties of the used materials, the multisegment filter rod sections containing both filter segments and non-filter segments, the multisegment articles having a lowered tobacco content, as well as to the cigarettes with an appended single or multi segment mouthpiece.

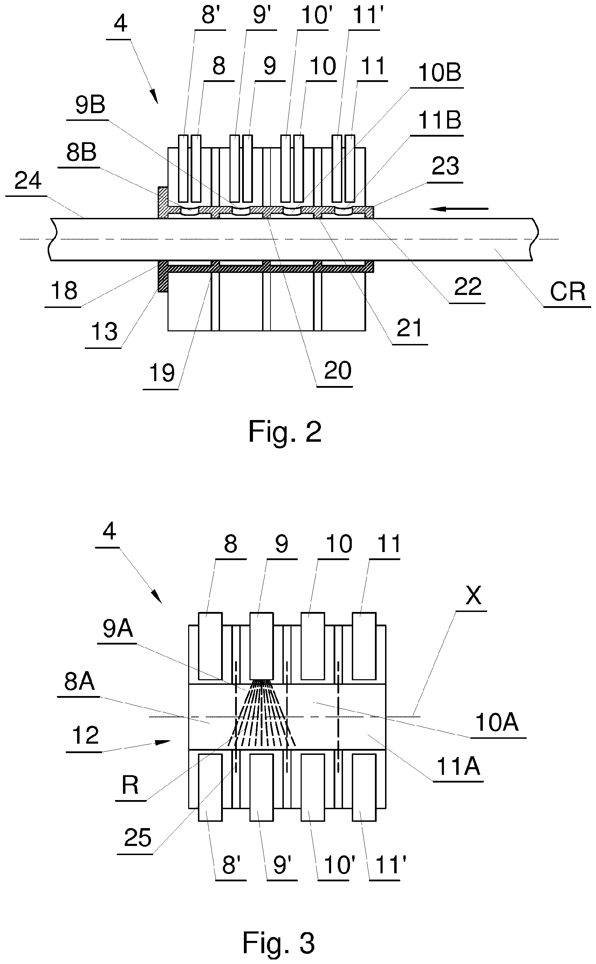

The measuring head 4 according to the first embodiment of the invention is shown in fig. 2 The measuring head 4 is adapted to take measurements of the parameters of an endless rod CR transported in the machine. The measuring head 4 is equipped with four sensor units 8-8', 9-9', 10-10', 11-11', each of which comprises a radiation source 8, 9, 10, 11 and a radiation receiver 8', 9', 10', 11'. The radiation source and the radiation receiver of each sensor unit are located on the same side of a through channel 12 inside which the rod-like elements are guided.

In figs. 2-5, four sensor units 8-8', 9-9', 10-10', 11-11' are shown for the sake of simplicity as if they were angularly aligned with respect to an axis X of the measuring head 4. In practice, any number of sensor units may be used and they may be offset by any angle with respect to the axis X. Further, the radiation sources and a radiation receivers as such may be spaced from the measuring head according to the invention, whereas their measuring contacts, e.g. the photosensitive end pieces of the optical sensors, are associated with the measuring head. The sensor units 8-8', 9-9', 10-10', 11-11' of the measuring head according to the invention are selected from typical sensors employed in tobacco industry e.g. optical, infrared, laser, ultrasound, ultraviolet, Roentgen, gamma, capacitive, microwave and other sensors. The radiation receivers 8', 9', 10', 11' receive or reflect the signals emitted by the corresponding radiation sources 8, 9, 10, 11.

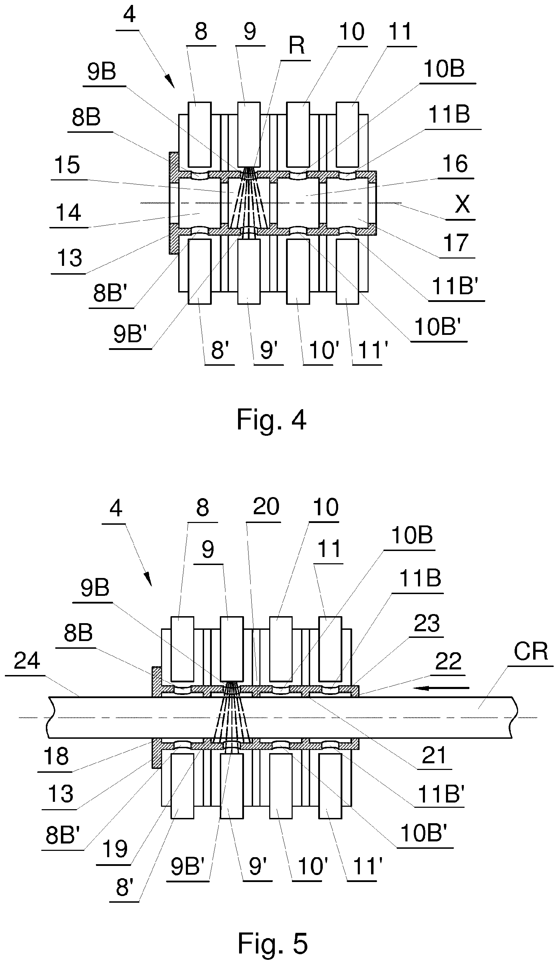

In fig. 2 flanges 18, 19, 20, 21, 22 formed in the protective member 13 are shown. The flanges 19, 20, 21 project inward the protective member 13 and the flanges 18, 22 delimit the endings of the member 13, all of the flanges defining the compartments 14, 15, 16, 17 (best seen in fig. 4). The compartments 14, 15, 16, 17 correspond to respective operation zones 8A, 9A, 10A, 11A (best seen in fig. 3), indicated by dotted lines 25.

The flanges 18, 19, 20, 21, 22 and the rod-like element CR travelling within the protective member 13 delimit a space corresponding to each sensor unit 8-8', 9-9', 10-10', 11-11', each space being located between an internal wall 23 of the protective member 13, a peripheral wall 24 of said rod-like element and two neighboring flanges. Each compartment of the protective member 13 comprises at least one first opening 8B, 9B, 10B, 11B enabling percolation of the radiation emitted and received or reflected by the sensor units 8-8', 9-9', 10-10', 11-11'. As shown in fig. 2, each opening 8B, 9B, 10B, 11B is located opposite to a corresponding sensor unit.

Due to such configuration of the flanges 18, 19, 20, 21, 22 and to the openings that limit the width of a radiation beam, each operation zone 8A, 9A, 10A, 11A of a respective sensor unit 8-8', 9-9', 10-10', 11-11' is substantially inaccessible to the radiation emitted by the neighboring sensor units. The distance by which the flanges 18, 19, 20, 21, 22 project inward the protective member 13 is adapted to the diameter of the rod-like element. The protective member 13 shown in the figures has a tubular shape, preferably of a circular cross-section; however it may also have a rectangular or polygonal cross-section. Consequently, the compartments may have respectively a cylindrical, cuboid or prismatic shape.

In fig. 3 the measuring head 4 according to a second embodiment is shown. The figure shows a theoretical situation where the protective member 13 has been removed. In this embodiment the radiation sources 8, 9, 10, 11 and the radiation receivers 8', 9', 10', 11' of each sensor unit are located on opposite sides of the through channel 12. As shown in fig. 3, with the protective member removed, the radiation emitted by the specific sensor units 8-8', 9-9', 10-10', 11-11' goes beyond their respective operation zones 8A, 9A, 10A, 11A, i.e. the spaces located between the specific radiation sources 8, 9, 10, 11 and their respective radiation receivers 8', 9', 10', 11'.

In fig. 4 a longitudinal section of the measuring head of fig. 3 with the protective member 13 present inside. However, in fig. 4 the rod-like element is not present inside. The flanges 18, 19, 20, 21, 22 formed in the protective member 13 are clearly seen. The flanges 18, 19, 20, 21, 22 project inside the protective member 13 or delimit its endings and define the compartments 14, 15, 16, 17 corresponding respectively to the operation zones 8A, 9A, 10A, 11A. Apart from the first openings 8B, 9B, 10B, 11B, the protective member 13 comprises the opposite second openings 8B', 9B', 10B', 11B' enabling reception of the radiation emitted by the sources 8, 9, 10, 11 by their respective receivers 8', 9', 10', 11'.

In fig. 4 an exemplary radiation beam is shown, its width having been limited upon passing through the first opening 9B.

Fig. 5 shows the same second embodiment of the measuring head 4 shown in figs. 2 and 3, with the protective member 13 present and the rod-like element, i.e. the rod CR travelling within. An exemplary radiation beam emitted by the source 9 is also shown, the beam passing through the first opening 9B, then through the rod CR and finally through the second opening 9B' to the radiation receiver 9'.

The protective member 13 may be made of metal, e.g. stainless steel, and generally of a material radiopaque to the radiation used in the measuring head or of a material suitable for insulating the operation zones of the sensors. The protective member 13 may be screwed or clamped to a frame of a machine or it may be attached by any typical method enabling easy replacement.

## Claims

1. A measuring head (4) for use in tobacco industry,
the measuring head (4) comprising at least two neighboring sensor units (8-8', 9-9', 10-10', 11-11') enabling to take measurements of the parameters of rod-like elements, in particular rod sections and/or an endless rod, travelling within the measuring head (4), by means of radiation emitted and received by the sensor units (8-8', 9-9', 10-10', 11-11'),
the measuring head (4) comprising a protective member (13) for the rod-like elements extending through the operation zones (8A, 9A, 10A, 11A) of the specific sensor units (8-8', 9-9', 10-10', 11-11'), wherein
compartments (14, 15, 16, 17) are defined in the protective member (13), each compartment corresponding to the operation zone (8A, 9A, 10A, 11A) of one sensor unit (8-8', 9-9', 10-10', 11-11') and each compartment (14, 15, 16, 17) comprising at least one first opening (8B, 9B, 10B, 11B) enabling percolation of said radiation,
**characterized in that**
the protective member (13) has a generally tubular shape and separate compartments (14, 15, 16, 17) are defined by means of flanges (18, 19, 20, 21, 22), each flange delimitating, together with the rod-like element travelling within the protective member (13), a space assigned to each sensor unit (8-8', 9-9', 10-10', 11-11'), said space being located between the peripheral wall (24) of the rod-like element, by two neighboring flanges (18, 19, 20, 21, 22) and by the internal wall (23) of the protective member (13), and said space being substantially inaccessible to the radiation emitted by the neighboring sensor units.

2. The measuring head according to claim 1, **characterized in that** each sensor unit (8-8', 9-9', 10-10', 11-11') comprises a radiation source (8, 9, 10, 11) and a radiation receiver (8', 9', 10', 11'), both being located on the same side of the protective member.

3. The measuring head according to claim 1, **characterized in that** each sensor unit (8-8', 9-9', 10-10', 11-11') comprises a radiation source (8, 9, 10, 11) located on one side of the protective member (13) and a radiation receiver (8', 9', 10', 11') located on the opposite side of the protective member (13) opposite to the respective radiation source, each compartment (14, 15, 16, 17) of the protective member (13) further comprising at least one second opening (8B', 9B', 10B', 11B') enabling percolation of said radiation, located opposite to a corresponding first opening (8B, 9B, 10B, 11B).

4. The measuring head according to claim 1, **characterized in that** the protective member (13) of the measuring head (4) is made of a material radiopaque to the radiation emitted and received by the sensor units (8-8', 9-9', 10-10', 11-11'), the radiation being selected from a group comprising visible radiation, infrared radiation and ultraviolet radiation.

## Patentansprüche

1. Ein Messkopf (4) für den Einsatz in der Tabakindustrie,
wobei der Messkopf (4) mindestens zwei benachbarte Sensoreinheiten (8-8', 9-9', 10-10', 11-11') umfasst, die es ermöglichen, Messungen der Parameter von stabförmigen Elementen, insbesondere Stababschnitten und/oder einem endlosen Stab, die sich innerhalb des Messkopfes (4) bewegen, mittels Strahlung, die von den Sensoreinheiten (8-8', 9-9', 10-10', 11-11') ausgesendet und empfangen wird, vorzunehmen,
wobei der Messkopf (4) ein Schutzelement (13) für die stabförmigen Elemente aufweist, das sich durch die Arbeitszonen (8A, 9A, 10A, 11A) der spezifischen Sensoreinheiten (8-8', 9-9', 10-10', 11-11') erstreckt, wobei
Fächer (14, 15, 16), 17) in dem Schutzelement (13) definiert sind, wobei jedes Fach der Arbeitszone (8A, 9A, 10A, 11A) einer Sensoreinheit (8-8', 9-9', 10-10', 11-11') entspricht und jedes Fach (14, 15, 16, 17) mindestens eine erste Öffnung (8B, 9B, 10B, 11B) aufweist, die die Perkolation der genannten Strahlung ermöglicht,
**dadurch gekennzeichnet, dass**
das Schutzelement (13) eine im Allgemeinen röhrenförmige Form aufweist und getrennte Fächer (14, 15, 16, 17) mittels Flanschen (18, 19, 20, 21, 22) definiert sind, wobei jeder Flansch zusammen mit dem stabförmigen Element, das sich innerhalb des Schutzelements (13) bewegt, einen Raum begrenzt, der jeder Sensoreinheit (8-8', 9-9', 10-10', 11-11') zugeordnet ist, wobei dieser Raum zwischen der Umfangswand (24) des stabförmigen Elements, durch zwei benachbarte Flansche (18, 19, 20, 21, 22) und durch die Innenwand (23) des Schutzelements (13) angeordnet ist und dieser Raum für die von den benachbarten Sensoreinheiten emittierte Strahlung im wesentlichen unzugänglich ist.

2. Der Messkopf nach Anspruch 1, **dadurch gekennzeichnet, dass** jede Sensoreinheit (8-8', 9-9', 10-10', 11-11') eine Strahlungsquelle (8, 9, 10, 11) und einen Strahlungsempfänger (8', 9', 10', 11') umfasst, die sich beide auf derselben Seite des Schutzelements befinden.

3. Der Messkopf nach Anspruch 1, **dadurch gekennzeichnet, dass** jede Sensoreinheit (8-8', 9-9', 10-10', 11-11') eine Strahlungsquelle (8, 9, 10, 11), die auf einer Seite des Schutzelements (13) angeordnet ist, und einen Strahlungsempfänger (8', 9', 10', 11') umfasst, die auf der der jeweiligen Strahlungsquelle gegenüberliegenden Seite des Schutzelements (13) angeordnet ist, wobei jedes Fach (14, 15, 16, 17) des Schutzelements (13) ferner mindestens eine zweite Öffnung (8B', 9B', 10B', 11B') aufweist, die eine Perkolation der Strahlung ermöglicht und gegenüber einer entsprechenden ersten Öffnung (8B, 9B, 10B, 11B) angeordnet ist.

4. Der Messkopf nach Anspruch 1, **dadurch gekennzeichnet, dass** das Schutzelement (13) des Messkopfes (4) aus einem Material hergestellt ist, das für die von den Sensoreinheiten (8-8', 9-9', 10-10', 11-11') ausgesandte und empfangene Strahlung undurchlässig ist, wobei die Strahlung aus einer Gruppe ausgewählt ist, die sichtbare Strahlung, Infrarotstrahlung und Ultraviolettstrahlung umfasst.

## Revendications

1. Tête de mesure (4) destinée à être utilisée dans l'industrie du tabac,
la tête de mesure (4) comprenant au moins deux unités de détection voisines (8-8', 9-9', 10-10', 11-11') permettant de prendre des mesures des paramètres d'éléments en forme de tige, en particulier de tige des sections et / ou une tige sans fin, se déplaçant à l'intérieur de la tête de mesure (4), au moyen d'un rayonnement émis et reçu par les unités de détection (8-8', 9-9', 1 0-10', 11-11'),
la tête de mesure (4) comprenant un élément de protection (13) pour les éléments en forme de tige s'étendant à travers les zones de fonctionnement (8A, 9A, 10A, 11A) des unités de détection spécifiques (8-8', 9-9', 10 -10', 11-11'), dans laquelle
des compartiments (14, 15, 16, 17) sont définis dans l'élément de protection (13), chaque compartiment correspondant à la zone de fonctionnement (8A, 9A, 10A, 11A) d'une unité de détection (8-8', 9-9', 10-10', 11-11') et chaque compartiment (14, 15, 16, 17) comprenant au moins une première ouverture (8B, 9B, 10B, 11B) permettant la filtration dudit rayonnement, **caractérisée en ce que**
l'élément de protection (13) a une forme générale tubulaire et des compartiments séparés (14, 15, 16, 17) sont définis au moyen de rebords (18, 19, 20, 21, 22), chaque rebord délimitant, conjointement avec l'élément en forme de tige se déplaçant à l'intérieur de l'élément de protection (13), un espace attribué à chaque unité de détection (8-8', 9-9', 10-10', 11-11'), ledit espace étant situé entre la paroi périphérique (24) de l'élément en forme de tige, par deux rebords voisins (18, 19, 20, 21, 22) et par la paroi interne (23) de l'élément de protection (13), et ledit espace étant sensiblement inaccessible au rayonnement émis par les unités de détection voisines.

2. Tête de mesure selon la revendication 1, **caractérisée en ce que** chaque unité de détection (8-8', 9-9', 10-10', 11-11') comprend une source de rayonnement (8, 9, 10, 11) etun récepteur de rayonnement (8', 9', 10', 11'), tous deux étant situés du même côté de l'élément de protection.

3. Tête de mesure selon la revendication 1, **caractérisée en ce que** chaque unité de détection (8-8', 9-9', 10-10', 11-11') comprend une source de rayonnement (8, 9, 10, 11) située sur un côté de l'élément de protection (13) et un récepteur de rayonnement (8', 9', 10', 11') situé du côté opposé de l'élément de protection (13) opposé à la source de rayonnement respective, chaque compartiment (14, 15, 16, 17) de l'élément de protection (13) comprenant en outre au moins une deuxième ouverture (8B', 9B', 10B', 11B') permettant la filtration dudit rayonnement, située à l'opposé d'une première ouverture correspondante (8B, 9B, 10B, 11B).

4. Tête de mesure selon la revendication 1, **caractérisée en ce que** l'élément de protection (13) de la tête de mesure (4) est en un matériau radio-opaque au rayonnement émis et reçu par les unités de détection (8-8', 9-9', 10-10', 11-11'), le rayonnement étant choisi dans un groupe comprenant le rayonnement visible, le rayonnement infrarouge et le rayonnement ultraviolet.
